# EUROPÄISCHE PATENTANMELDUNG

(11) **EP 2 998 672 A1**
(43) Veröffentlichungstag der Anmeldung: **23.03.2016**
(21) Anmeldenummer: 14185181.6
(22) Anmeldetag: 17.09.2014
(51) Int. Cl.: F27B 3/19, F27D 3/15, C21C 5/46

(54) **Abstich an einem metallurgischen Gefäss, insbesondere einem Elektrolichtbogenofen**

(71) Anmelder: Refractory Intellectual Property GmbH & Co. KG, 1100 Wien (AT)
(72) Erfinder: Bachmayer, Josse, 4813 Altmünster (AT); Zettl, Karl Michael, 1100 Wien (AT); Hochegger, Markus, 1070 Wien (AT)
(74) Vertreter: Luchs, Willi

(57) **Zusammenfassung**

Ein Abstich an einem metallurgischen Gefäss, insbesondere einem Elektrolichtbogenofen, ist mit einem eine Auslassöffnung (10) aufweisenden feuerfesten Endstein (6) versehen. An der unteren Stirnfläche (11) des Endsteins (6) ist eine Nut (15) zugeordnet, die derart geformt ist, dass mit ihr beim Entleeren des Gefässes eine Abrisskante (16) bei der Auslassöffnung (10) generiert wird. Diese Nut (15) ist ringförmig ausgebildet und dabei mit einer radial nach aussen geneigten Schrägfläche (18) versehen, dadurch diese Abrisskante (16) unmittelbar an die Auslassöffnung (10) folgend gebildet ist. Somit kann nach jedem Abstichvorgang der Abstich ohne manuelles Zutun durch Abscheren mit der Vorderkante der Platte der Verschlussvorrichtung gereinigt werden.

## Beschreibung

Die Erfindung betrifft einen Abstich an einem metallurgischen Gefäss, insbesondere einem Elektrolichtbogenofen, mit einem eine Auslassöffnung des Abstichkanals aufweisenden feuerfesten Endstein.

Derartige Elektrolichtbogenöfen werden zum Erzeugen von flüssigem Rohstahl eingesetzt. Der Ofen ist mit einem Abstich ausgestattet, dessen Abstichkanal ein Auslaufen des flüssigen Rohstahls aus dem Ofen in eine Pfanne oder ein ähnliches metallurgisches Gefäss ermöglicht, mittels dem der flüssige Rohstahl zur Weiterverarbeitung transportiert werden kann.

Der Abstich besteht standardmässig aus aneinandergereihten hülsenförmigen Einzelsegmenten, wobei das Segment am Auslass, welches sich in einem Halteflansch befindet, als Endstein bezeichnet wird. Bekannt ist auch, dass diese Einzelsegmente mit sogenannten Nut/Federn ausgebildet sind, welche aber einen ringförmigen Absatz nahe beim Aussendurchmesser bzw. einen Steg nahe beim Innendurchmesser aufweisen.

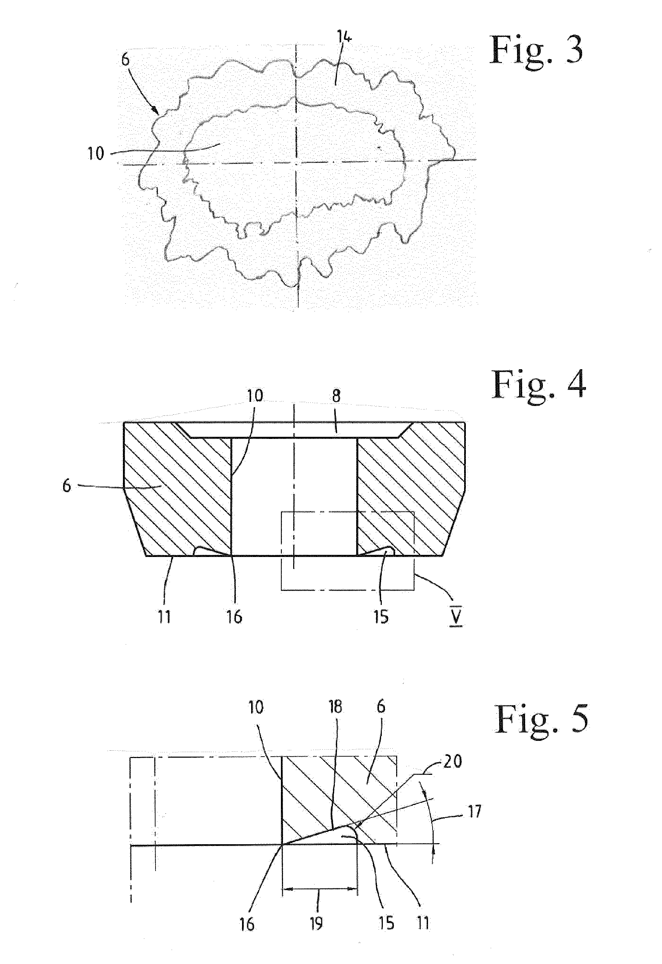

Üblicherweise ist beim Elektrolichtbogenofen ein Verschliessen des Abstichkanals durch eine Verschlussvorrichtung notwendig, da der Abstichkanal vor Beginn jedes Aufschmelzvorganges im Ofen mit Füllsand gefüllt wird. Bei geöffneter Verschlussvorrichtung besteht aber die Gefahr, dass im Laufe des Abstichprozesses am Auslass des Abstichkanals kronenartige Stahl-Schlackeausfrierungen entstehen(siehe Fig. 3), die in weiterer Folge den Verschlussmechanismus des Abstichs blockieren können.

Bei herkömmlichen Abstichen tendiert der ausströmende Rohstahl beim Abstichvorgang dazu, an der durch Verschleiss konvex abgerundete Abrisskante der Auslaufkontur des Endsteins entlang zu strömen, anstatt sich dort abzulösen und in der vom Abstichkanal vorgegebenen Fliessrichtung weiterzubewegen. Diese Umlenkung der Strömungsrichtung begünstigt die Bildung dieser kronenartigen Ausfrierungen.

Um ein Verschliessen zu ermöglichen, müssen diese Ausfrierungen entfernt werden. Manche Verschlussvorrichtungen sind mit einer Platte ausgestattet, deren Vorderkante die Ausfrierungen abschert. Wenn dies nicht möglich ist, müssen sie manuell mit Brecheisen weggeschlagen werden. In beiden Fällen wird dem Endstein des Abstichs ein beträchtlicher mechanischer Verschleiss zugefügt, wobei mit zunehmendem Verschleiss die Ausfrierungen sich verstärken und es infolgedessen immer schwieriger wird, sie zu entfernen.

Die manuelle Beseitigung von Ausfrierungen am Endstein des Abstichkanals ist auf jeden Fall aufwendig und somit verfahrenstechnisch von Nachteil, weil sie die Frequenz der aufeinanderfolgenden Abstichvorgänge erniedrigt und somit die Produktivität der Stahlerzeugungsanlage beeinträchtigt. Die Ausfrierungen beschleunigen zudem den mechanischen Verschleiss des Endsteins und verkürzen dadurch die Lebensdauer des Abstichs.

Der Erfindung liegt die Aufgabe zugrunde, einen Abstich der eingangs genannten Art zu schaffen, der im Wesentlichen ohne manuelle Beseitigung der Ausfrierungen arbeitet und mit einfachen Mitteln eine längere Einsatzdauer des Abstiches ermöglicht.

Diese Aufgabe ist erfindungsgemäss nach den Merkmalen des Anspruchs 1 gelöst.

Durch die erfindungsgemässe Massnahme, den feuerfesten Endstein des Abstiches mit einer dauerhaft intakten Abrisskante zu versehen, wird dieser Tendenz des Stahlstroms entgegenwirkt, diese vom Abstichkanal vorgegebene Strömungsrichtung zu verlassen.

Nach jedem Abstichvorgang kann die Abrisskante ohne manuelles Zutun durch Abscheren mit der Vorderkante der Platte der Verschlussvorrichtung gereinigt werden. Daraus resultiert auch eine längere Einsatzdauer des Endsteines. Diese Einsatzdauer bestimmt aber massgeblich die Effizienz des Abstichprozesses und ist somit ein wichtiger Faktor, der die Produktivität mit beeinflusst.

Zur Generierung dieser dauerhaft intakten Abrisskante wird an der unteren Stirnfläche des Endsteins eine Nut vorgesehen, deren Schrägfläche in Bezug zur Stirnfläche einen Winkel zwischen 5° und 20°, vorzugsweise 17°, aufweist.

Zweckmässigerweise ist die Nut auf der von der Abrisskante des Abstichkanals abgekehrten Seite im Querschnitt gesehen abgerundet. Das trägt dazu bei, dass die Nut praktisch die strukturelle Stabilität des feuerfesten Endsteins nicht beeinträchtigt.

Der Effekt der erfindungsgemässen Nut kann auch für besondere Einsatzbedingungen verstärkt werden, indem sie von mindestens einer weiteren Nut mit vorzugsweise annähernd gleichem Profil umschlossen ist, wobei je nach Einsatzfall beide Nuten gleiche oder unterschiedliche Abmessungen aufweisen können.

Die Erfindung ist nachfolgend anhand von Ausführungsbeispielen unter Bezugnahme auf die Zeichnung näher erläutert. Es zeigen:
- Fig. 1: eine Draufsicht auf einen Elektrolichtbogenofen zur Stahlerzeugung;
- Fig. 2: einen Längsschnitt des Elektrolichtbogenofens gemäss der Linie II-II in Fig. 1;
- Fig. 3: schematisch veranschaulichte kronenartige Stahl-Schlackeausfrierung bei einem Endstein nach dem Stand der Technik;
- Fig. 4: ein erfindungsgemässer Endstein, im Schnitt dargestellt;
- Fig. 5: eine Einzelheit V des Endsteins nach Fig. 4, vergrössert dargestellt, und
- Fig. 6: ein Schnitt einer Variante eines erfindungsgemässen Endsteins.

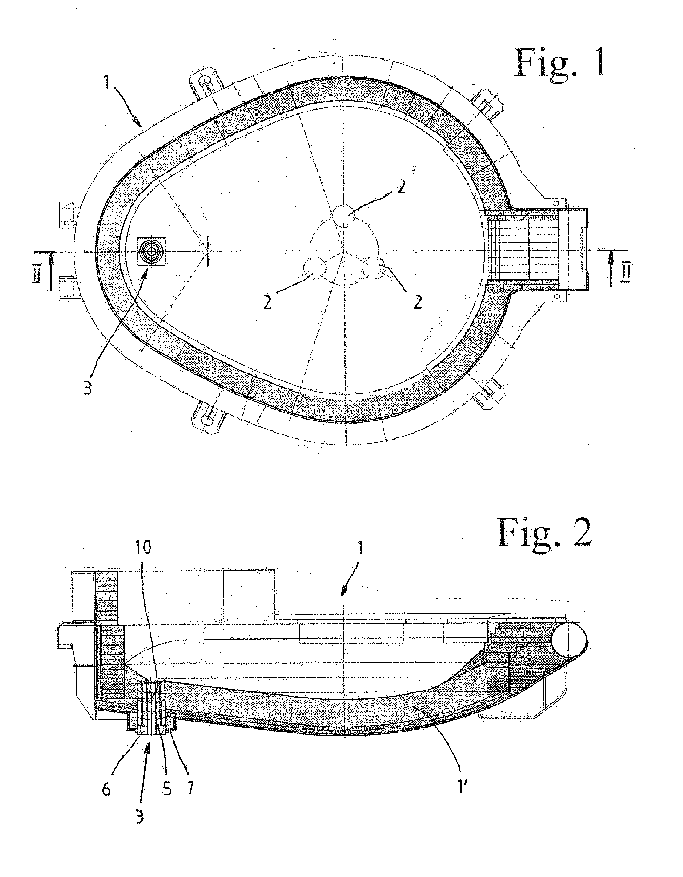

Fig. 1 und Fig. 2 zeigen ein als Elektrolichtbogenofen 1 vorgesehenes metallurgisches Gefäss mit drei angedeuteten Elektroden 2 und einem Abstich 3 für die Entleerung desselben. Der Elektrolichtbogenofen 1 ist dabei kippbar angeordnet, damit die erzeugte Metallschmelze restlos ausgelassen werden kann. Dieser Abstich 3 mit einem Abstichkanal 10 ist in der feuerfesten Auskleidung 1' im Boden des Ofens enthalten. Es ist nicht näher auf die Funktionsweise dieses Elektrolichtbogenofen 1 eingegangen, da diese bekannt ist.

Im Prinzip könnte anstelle eines Elektrolichtbogenofens 1 auch ein anderes metallurgisches Gefäss vorgesehen sein, zum Beispiel ein Konverter oder Kippofen für Nichteisen-Metallschmelze.

Der Abstich 3 ist aus mehreren aneinandergereihten hülsenförmigen feuerfesten Einzelsegmenten 5 und aus einem unten beim Ofen vorstehenden Endstein 6 gebildet, welcher in einem Halteflansch 7 lösbar befestigt ist. Die Einzelsegmente 5 und der Endstein 6 sind dabei aus feuerfestem Material hergestellt, zum Beispiel gebrannter bzw. kohlenstoffgebundener Magnesit- oder Tonerdestein.

In Fig. 3 ist schematisch eine solche dreidimensionale kronenartige Stahl-Schlackeausfrierung 14 zur Verdeutlichung dargestellt, welche sich bei den bekannten Endsteinen an der unteren Stirnseite bei jedem Abstichvorgang bildet.

Vor Beginn eines Aufschmelzvorganges muss jedesmal der Abstichkanal 10 verschlossen werden, um ihn mit Füllsand zu füllen. Das Verschließen erfolgt durch eine Verschlussvorrichtung, deren Platte den Abstichkanal 10 am Auslass schließt. Ein einwandfreies Verschließen ist nicht gewährleistet, wenn sich im Auslassbereich des Endsteins 6 entstehende Stahl-Schlackeausfrierungen aufgebaut haben, welche die Verschlussvorrichtung blockieren.

Um das zu verhindern, ist der erfindungsgemässe Endstein nach Fig. 4 bzw. Fig. 5 mit einer die Auslassöffnung umlaufenden Nut 15 versehen, die in der Stirnfläche 11 des Endsteins 6 eine scharfe Abrisskante 16 bildet. Diese verhindert, dass dort eine Abrundung der Auslauffläche entstehen kann, welche die Bildung von Ausfrierungen begünstigt. Vorzugsweise ist diese Abrisskante 16 unmittelbar an die Auslassöffnung 10 folgend gebildet.

Wie in Fig. 5 ersichtlich, ist die Nut 15 im Querschnitt gesehen so ausgestaltet, dass sie eine radial nach aussen geneigte Schrägfläche 18 relativ zur Stirnfläche 11 des Endsteins um einen Winkel 17 zwischen 5° und 20°, vorzugsweise 17°, aufweist. Die radiale Breite 19 der Nut 15 beträgt von 2 bis 10 cm, vorzugsweise 5 cm. Die Nut 15 ist auf der von der Abrisskante 16 abgekehrten Seite 20 abgerundet. Sie kann entweder beim Pressen des Endsteins oder nachträglich im fertigen Endstein eingefräst werden.

Die beschriebene Geometrie der Nut 15 hat sich als optimal erwiesen, wenn der Abstich unter normalen Betriebsbedingungen arbeitet. Es ist aber selbstverständlich auch im Rahmen der Erfindung möglich, je nach Einsatzbedingungen das Nutprofil in einem bestimmten Masse zu variieren, sofern er die Bildung einer scharfen Abrisskante ohne nennenswerte Beeinträchtigung der strukturellen Stabilität des Endsteines sicherstellt.

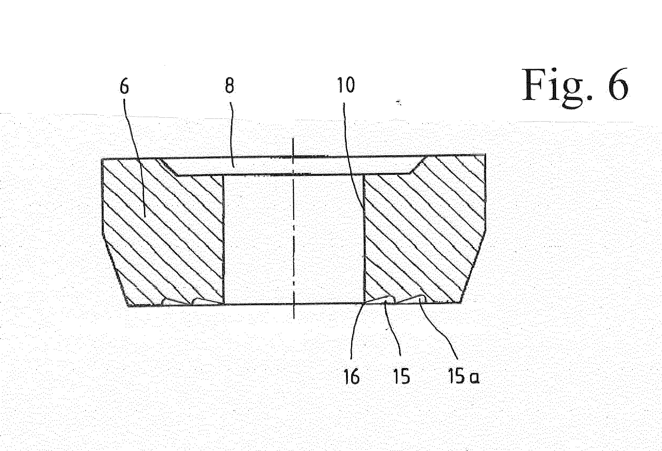

Gemäss Fig. 6 kann als Variante eines Endsteins vorgesehen sein, den Effekt der Nut 15 zu verstärken, indem bei der Stirnfläche 11 des Endsteins mindestens eine weitere Nut 15a vorgesehen ist, welche die Nut 15 umgibt und mit vorzugsweise annähernd dem gleichen Profil ausgebildet ist.

Die Erfindung ist mit den obigen Ausführungsbeispielen ausreichend dargetan. Selbstverständlich könnte sie noch durch andere Varianten erläutert sein. So könnte der unteren Stirnfläche des Endsteins eine Nut mit bloss einem Teilkreis zugeordnet sein. Der Endstein mit der Nut müsste dabei durch diesen Halteflansch so am Elektrolichtbogenofen montiert sein, dass beim Kippen des Ofens annähernd die Hälfte des Endsteins mit der Nut bzw. der Abrisskante versehen wäre, bei welcher die Schmelze ausfliesst.

## Patentansprüche

1. Abstich an einem metallurgischen Gefäss, insbesondere einem Elektrolichtbogenofen, mit einem eine Auslassöffnung (10) aufweisenden feuerfesten Endstein (6), **dadurch gekennzeichnet, dass** an der unteren Stirnfläche (11) des Endsteins (6) eine Nut (15) zugeordnet ist, die derart geformt ist, dass mit ihr beim Entleeren des Gefässes eine Abrisskante (16) bei der Auslassöffnung (10) generiert wird.

2. Abstich nach Anspruch 1, **dadurch gekennzeichnet, dass** die Nut (15) ringförmig ausgebildet und dabei mit einer radial nach aussen geneigten Schrägfläche (18) versehen ist, die im Querschnitt gesehen relativ zur Stirnfläche (11) des Endsteins (6) um einen Winkel (17) zwischen 5° und 20° verläuft, und dadurch diese Abrisskante (16) unmittelbar an die Auslassöffnung (10) folgend gebildet ist.

3. Abstich nach Anspruch 2, **dadurch gekennzeichnet, dass**
die Schrägfläche (18) der Nut (15) vorzugsweise um einen Winkel (17) von annähernd 17° relativ zur Stirnfläche (11) des Endsteins (6) geneigt ist.

4. Abstich nach einem der vorhergehenden Ansprüche 1 bis 3, **dadurch gekennzeichnet, dass**
die Nut (15) teilkreisförmig vorzugsweise annähernd hälftig ausgebildet ist und die Auslassöffnung (10) konzentrisch umgibt.

5. Abstich nach einem der vorhergehenden Ansprüche 1 bis 4, **dadurch gekennzeichnet, dass**
die Nut (15) je nach Abmessungen des Abstichs eine die radiale Nutenbreite Breite (19) von 2 bis 10 cm aufweist.

6. Abstich nach einem der vorhergehenden Ansprüche 1 bis 5, **dadurch gekennzeichnet, dass**
die im Querschnitt dreieckförmig ausgebildete Nut (15) auf der von der Abrisskante (16) abgekehrten Seite (20) abgerundet ist.

7. Abstich nach einem der vorhergehenden Ansprüche 1 bis 6, **dadurch gekennzeichnet, dass**
die Nut (15) von mindestens einer weiteren Nut (15a) radial umgeben ist.

8. Abstich nach Anspruch 7, **dadurch gekennzeichnet, dass** beide Nuten (15, 15a) mit annähernd gleichem Profil dimensioniert sind oder unterschiedliche Abmessungen aufweisen.

9. Feuerfester Endstein für einen Abstich nach einem der vorhergehenden Ansprüche 1 bis 8, mit einer Auslassöffnung (10), **dadurch gekennzeichnet, dass**
an der einen Stirnfläche (11) eine Nut (15) zugeordnet ist, die derart geformt ist, dass mit ihr eine Abrisskante (16) bei der Auslassöffnung (10) gebildet ist.

10. Feuerfester Endstein nach Anspruch 9, **dadurch gekennzeichnet, dass**
die Nut (15) kreis- oder teilkreisförmig ausgebildet ist und die Auslassöffnung (10) konzentrisch umgibt.

11. Feuerfester Endstein nach Anspruch 9 oder 10, **dadurch gekennzeichnet, dass**
die Nut (15) beim Formen des Endsteins vorgesehen oder eingefräst ist.

12. Feuerfester Endstein nach einem der vorhergehenden Ansprüche 9 bis 11, **dadurch gekennzeichnet, dass**
auf der andern Stirnfläche des hülsenförmigen Endsteins (6) eine Einfassung (8) für eine Zentrierung desselben vorgesehen ist.
